# EUROPEAN PATENT SPECIFICATION

(11) **EP 4 549 409 B1**
(45) Date of publication and mention of the grant of the patent: **01.04.2026**
(21) Application number: 24208880.5
(22) Date of filing: 25.10.2024
(51) Int. Cl.: C03C 3/19, A01N 25/12, A01N 59/16, C03C 3/21, C03C 12/00, C08K 3/40

(54) **ANTIBACTERIAL GLASS COMPOSITION, METHOD OF PREPARING ANTIBACTERIAL GLASS POWDER USING THE SAME, AND HOME APPLIANCE INCLUDING THE ANTIBACTERIAL GLASS POWDER**
ANTIBAKTERIELLE GLASZUSAMMENSETZUNG, VERFAHREN ZUR HERSTELLUNG VON ANTIBAKTERIELLEM GLASPULVER DAMIT UND HAUSHALTSGERÄT MIT DEM ANTIBAKTERIELLEN GLASPULVER
COMPOSITION DE VERRE ANTIBACTÉRIEN, PROCÉDÉ DE PRÉPARATION DE POUDRE DE VERRE ANTIBACTÉRIEN UTILISANT CELLE-CI, ET APPAREIL DOMESTIQUE COMPRENANT LA POUDRE DE VERRE ANTIBACTÉRIEN

(30) Priority: 26.10.2023 KR 20230144888
(43) Date of publication of application: 07.05.2025
(73) Proprietor: LG Electronics Inc., Yeongdeungpo-gu Seoul 07336 (KR)
(72) Inventor: KIM, Daesung, 08592 Seoul (KR); KIM, Namjin, 08592 Seoul (KR); KANG, Dongwon, 08592 Seoul (KR); KIM, Young Seok, 08592 Seoul (KR); CHOI, Wongyu, 08592 Seoul (KR)
(74) Representative: Vossius & Partner Patentanwälte Rechtsanwälte mbB

(56) References cited:
- EP-A1- 1 116 700
- JP-A- 2005 314 292

## Description

### BACKGROUND

### Field

The present disclosure relates to an antibacterial glass composition, a method for preparing an antibacterial glass powder using the same, and a home appliance including the antibacterial glass powder.

### Description of Related Art

Microorganisms such as germs, fungi, and bacteria are ubiquitous in our living spaces such as water purifiers, refrigerators, ovens, and washing machines. When microorganisms enter the human body, they may cause life-threatening infections. Therefore, an antibacterial glass composition capable of controlling spread of the microorganisms in the home appliances such as water purifiers, refrigerators, ovens, and washing machines is required.

In these home appliances, bacteria and molds may grow in a part that may be exposed to moisture among parts including plastic injection molded products, thereby causing problems in appearance or the environment.

The bacteria that live in home appliances are very diverse, and the main strains may vary depending on types of the parts. However, Pseudomonas aeruginosa is generally more likely to live in the parts that are exposed to moisture.

Therefore, an antibacterial agent should have antibacterial performance against these strains. Furthermore, the antibacterial agent should be strictly selected from materials that have low toxicity to the human body and the environment and have high temperature durability.

The antibacterial agents may be broadly divided into those of inorganic and organic types. The organic antibacterial agent releases antibacterial materials to a surface with water, thereby exhibiting antibacterial activity against bacteria. Thus, the organic antibacterial agent exhibits excellent antibacterial performance. However, durability of the organic antibacterial agent may be reduced when the organic antibacterial agent is applied to washing machines. Furthermore, the organic antibacterial agent has recently raised concerns about the human and environmental hazards of the released material therefrom. Furthermore, there is a risk of decomposition of the organic antibacterial agent during an injection molding process due to a low decomposition temperature thereof.

The inorganic antibacterial agent has considerably lower elution than that of the organic antibacterial agent and can secure high-temperature durability. However, the inorganic antibacterial agent may cause interface wettability problems with the plastic injection-molded product. The inorganic antibacterial agent generally employs silver (Ag) as the antibacterial material, so that a price thereof is high and application thereof is limited.

The antibacterial glass compositions including silver (Ag) as the antibacterial ingredient are known. Among these antibacterial glass compositions, a phosphate-based antibacterial glass composition that employs phosphate as a main ingredient is known.
The documents EP 1 116 700 A1 and JP 2005 314292 A describe antibacterial glass compositions.

In the antibacterial glass composition containing silver (Ag), it is important to enhance the durability of the antibacterial agent and prevent discoloration of silver (Ag). However, when Al₂O₃ which is commonly used to improve the durability of the antibacterial agent is added in a large quantity to the antibacterial glass composition, the antibacterial activity of the antibacterial agent may decrease.

On the contrary, when Al₂O₃ is excluded from the antibacterial glass composition, a component that lowers a melting point of the antibacterial glass composition should be used together. This causes discoloration of silver (Ag).

### SUMMARY

A purpose of the present disclosure is to provide a novel phosphate-based antibacterial glass composition that exhibits excellent durability and antibacterial performance, even without employing a melting point lowering component and a structure reinforcing component that cause side effects.

In addition, another purpose of the present disclosure is to provide a novel phosphate-based antibacterial glass composition that may prevent discoloration of silver (Ag) due to reduction of silver (Ag).

Furthermore, still another purpose of the present disclosure is to provide a novel phosphate-based antibacterial glass composition that has enhanced durability and thus improved antibacterial sustainability.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

The antibacterial glass composition according to the present disclosure may secure excellent durability and antibacterial performance even without including a melting point lowering component and a structural strengthening component.

To this end, the antibacterial glass composition according to the present disclosure solves the problems of the prior art via a combination of MnO₂ as a melting point lowering component and MgO, ZnO and/or WO₃ as a structural strengthening component based on the ionization tendency concept.

Specifically, the antibacterial glass composition according to the present disclosure includes 30 to 70 wt% of P₂O₅; 10 to 30 wt% of MgO; 10 to 35 wt% of at least one of ZnO and WO₃; 0.3 to 1 wt% of MnO₂; and 0.4 to 2 wt% of Ag₂O, wherein the antibacterial glass composition is free of K₂O, Na₂O, and CaO. The weight percentages are indicated on the basis of the total weight of the antibacterial glass composition.

In addition, the method for preparing the antibacterial glass powder according to the present disclosure includes (a) a step of mixing 30 to 70 wt% of P₂O₅, 10 to 30 wt% of MgO, 10 to 35 wt% of at least one of ZnO and WO₃, 0.3 to 1 wt% of MnO₂, and 0.4 to 2 wt% of Ag₂O with each other and stirring the mixture to prepare an antibacterial glass composition, wherein the antibacterial glass composition is free of K₂O, Na₂O, and CaO; (b) a step of melting the antibacterial glass composition; (c) a step of cooling the melted antibacterial glass composition; and (d) a step of pulverizing the cooled antibacterial glass composition. For step (a), the weight percentages are indicated on the basis of the total weight of the antibacterial glass composition.

Further, the home appliance of the present disclosure includes a plastic injection-molded product, wherein the plastic injection-molded product comprises a resin material and antibacterial glass powders added to the resin material, wherein the plastic injection-molded product comprises: 95.0 to 99.0 wt% of the resin material; and 1.0 to 5.0 wt% of the antibacterial glass powder. The weight percentages of the resin material and of the antibacterial glass powder are indicated on the basis of the total weight of the plastic injection-molded product. The antibacterial glass powder comprises: 30 to 70 wt% of P₂O₅; 10 to 30 wt% of MgO; 10 to 35 wt% of at least one of ZnO and WO₃; 0.3 to 1 wt% of MnO₂; and 0.4 to 2 wt% of Ag₂O, wherein the antibacterial glass powder is free of K₂O, Na₂O, and CaO. The weight percentages of the components comprised by the antibacterial glass powder are indicated on the basis of the total weight of the antibacterial glass powder.

According to the present disclosure, even when the melting point lowering component and the structure strengthening component that cause side effects are excluded, the phosphate-based antibacterial glass composition exhibiting excellent durability and antibacterial performance may be provided.

Furthermore, according to the present disclosure, as the melting point lowering component and the structure strengthening component that cause side effects are excluded, a phosphate-based antibacterial glass composition in which discoloration due to reduction of silver (Ag) is prevented, while excellent durability and antibacterial performance are exhibited may be provided.

In addition, according to the present disclosure, a novel phosphate-based antibacterial glass composition with enhanced durability and improved antibacterial sustainability may be provided.

In addition to the effects as described above, specific effects of the present disclosure are described together with the specific details for carrying out the disclosure below.

### BRIEF DESCRIPTION OF DRAWINGS

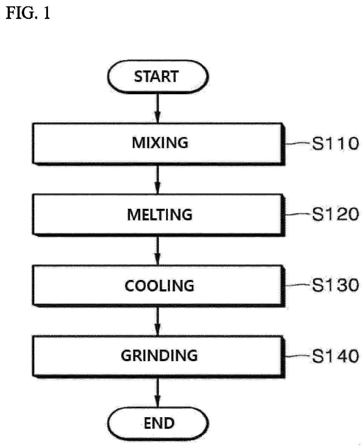

FIG. 1 is a process flow chart showing a method for preparing antibacterial glass powders according to an embodiment of the present disclosure.

### DETAILED DESCRIPTIONS

Hereinafter, an antibacterial glass composition according to some embodiments of the present disclosure, a method for preparing an antibacterial glass powder using the same, and a home appliance including the antibacterial glass powder will be described.

### Antibacterial glass composition

The antibacterial glass composition according to an embodiment of the present disclosure exhibits excellent durability and antibacterial performance even without including a melting point lowering component and a structure strengthening component that cause side effects.

The antibacterial glass composition of the present disclosure is a phosphate-based glass composition and comprises 30 to 70 wt% of P₂O₅; 10 to 30 wt% of MgO; 10 to 35 wt% of at least one of ZnO and WO₃; 0.3 to 1 wt% of MnO₂; and 0.4 to 2 wt% of Ag₂O, wherein the antibacterial glass composition is free of K₂O, Na₂O, and CaO.

Furthermore, the antibacterial glass composition of the present disclosure may further contain B₂O₃ at 20 wt% or smaller. Preferably, the composition may contain ZnO at 5 to 35 wt%, and WO₃ at 5 wt% or smaller.

Hereinafter, a role and a content of each of the components of the antibacterial glass composition according to an embodiment of the present disclosure will be described in detail.

### P₂O₅ and B₂O₃

In the antibacterial glass composition, in selection of a matrix containing therein silver (Ag), the electrochemical properties and the structural aspects of the glass should be taken into consideration. Silver has a high reducibility in terms of ionization tendency. Therefore, the vitrification of the antibacterial glass composition containing silver is affected by the types of a glass-forming oxide and a modifier oxide.

In general, it is known that the ionization tendency is centered on the alkaline-alkaline earth component. In this regard, silver is known as an element with high reduction and low ionization tendency. However, In accordance with the present disclosure, the tendency in the electrophile region, not the nucleophile region, is important. Considering the region in which the ionization tendency follows in the order of Ag - Pt - Au - Si - Ti - Ta - C - W - Mo - V - P, silver and Si have similar ionization tendencies and a smaller amount of non-bridging oxygen. Thus, it may be difficult for a silicate-based glass to contain silver.

Therefore, in the P₂O5 - (B₂O3)-based matrix, it may be easy for silver (Ag) to be stably vitrified as silver ions.

P₂O₅ and B₂O₃ are representative network-forming oxides that enable vitrification of antibacterial glass compositions. P₂O₅ and B₂O₃ are components that play the role of a framework in terms of the structure of the glass. Each of P₂O₅ and B₂O₃ has good glass-forming ability when being used alone at 100 wt%. In this case, a resulting glass has low durability due to moisture absorption.

In particular, when the two components P₂O₅ and B₂O₃ are used together, the glass structure becomes denser such that the durability of the glass may be slightly increased.

In accordance with the present disclosure, P₂O5 and B₂O₃ are low-melting point substances and network-forming oxides. Thus, when a total content of P₂O₅ and B₂O₃ is smaller than 50 wt%, unmelted product/immiscibility may occur such that vitrification is not achieved. In addition, when the total content of P₂O₅ and B₂O₃ is in excess of 70 wt%, the durability of the glass decreases and thus the glass easily dissolves in water. Therefore, although the glass initially has sufficient antibacterial activity, the antibacterial substance and matrix dissolve in water over time such that the composition cannot be used for a long period of time.

For this reason, the antibacterial glass composition of the present disclosure includes 30 to 70 wt% of P₂O₅. In addition, the antibacterial glass composition of the present disclosure may include 20 wt% or smaller of B₂O₃.

### MgO, MnO₂, and Ag₂O

Next, the antibacterial glass composition of the present disclosure includes MgO, MnO₂, and Ag₂O as modifier oxides.

The modifier oxide refers to an ionic bond component that cannot be vitrified alone and acts as a component of the glass and is located between covalent bonds that constitute the glass and affect the properties of the glass.

When selecting other components other than silver in the glass component system containing silver, the ionization tendency is an important factor. In the nucleophile region of K - Ca - Na- Mg - Al - Zn - Fe - Ni - Sn - Pb - (H) - Cu - Hg - Ag - Pt, K, Na, and Ca have high ionization tendencies and may reduce silver within the glass or in a state of being eluted out of the glass. Therefore, K₂O, Na₂O, and CaO are excluded from the composition.

First, MgO is an alkaline earth metal. However, unlike CaO, MgO enhances the durability of the phosphate-based glass and increases the melting point thereof due to influence of a single bond strength thereof with oxygen and an ion size thereof. Accordingly, in the phosphate-based glass, MgO is usually used together with alkali metal or CaO. According to the present disclosure, another solution for lowering the melting point is employed. According to the present disclosure, the use of Na₂O, K₂O, and CaO is excluded so that the antibacterial glass composition of the present disclosure employs MgO to strengthen the structure of the glass. MgO exists as the modifier oxide in the glass and plays a role in increasing an amount of non-bridging oxygens. However, since the bond strength of Mg-O is strong and the size of the Mg+ ion is smaller than that of each of Na+, K+, and Ca+, MgO has lower elution in water and thus improves the durability of the glass. A key mechanism under which each of Ca+, Na+, K+, and Ag+ is eluted in water is that in the initial reaction via substitution of H₃O+ ions and ionic bonding substances of glass, H₃O+ and Ca+, Na+, K+, and Ag+ have similar ion sizes, such that Ca+, Na+, K+, and Ag+ is easily eluted in water via the substitution.

The antibacterial glass composition of the present disclosure contains 10 to 30 wt% of MgO. When the content of MgO is smaller than 10 wt%, the durability synergy effect obtained by the Mg-O bond strength is minimal, resulting in reduced antibacterial sustainability. When the content of MgO exceeds 30 wt%, the melting point of the glass increases significantly, resulting in the unmelted product.

Next, in accordance with the present disclosure, MnO₂ is used as a modifier oxide and is widely used in glasses related to electromagnetic properties. According to the present disclosure, the property of MnO₂ to improve ion mobility in the glass state or molten state of the antibacterial glass composition is used. When ion mobility is improved in the molten state of the antibacterial glass composition, the viscosity of the glass decreases significantly, and thus the melting point decreases. Further, silver (Ag) ions which it is difficult to maintain in an ionic state are evenly distributed. Accordingly, silver (Ag) ions aggregation and silver (Ag) reduction are prevented.

The antibacterial glass composition of the present disclosure contains 0.3 to 1 wt% of MnO₂. When the content of MnO₂ is smaller than 0.3 wt%, the effect of lowering the melting point and improving the ion movement in the melt phase are insufficient. Accordingly, Zn/Mg immiscibility occurs in the antibacterial glass composition. On the other hand, when the content of MnO₂ is higher than 1 wt%, the antibacterial agent becomes black due to the change in the valence of Mn, such that there is a limit to its use as a general-purpose white/colorless additive.

Next, silver (Ag) is a representative component exhibiting the antibacterial activity. Ag exists in a form of a modifier oxide in an Ag+ state in the glass. When a large amount of silver (Ag) is added, the antibacterial activity is strengthened, while there are disadvantages such as decreased durability of the antibacterial agent, discoloration, and high cost.

The antibacterial glass composition of the present disclosure contains 0.4 to 2 wt% of Ag₂O. When the content of Ag₂O is lower than 0.4 wt%, sufficient antibacterial activity is not exhibited due to insufficient eluted Ag+ ions. When the content of Ag₂O exceeds 2 wt%, there is a problem in that the vitrification range is not satisfied, and thus, silver (Ag) is reduced to metal, and thus is precipitated in an inhomogeneous manner.

### ZnO and WO₃

The antibacterial glass composition of the present disclosure contains 10 to 35 wt% of at least one of ZnO and WO₃ as an intermediate oxide.

The intermediate oxide refers to a component that covalently bonds with a portion of a network-forming oxide to play both the role of a network-forming oxide and a modifier oxide.

ZnO is a component that plays both the role of a network-forming agent and a modifier oxide in terms of the glass structure. In addition, in accordance with the present disclosure, ZnO is a key component that exhibits an antibacterial effect. According to the present disclosure, use of alkaline oxides is excluded. In the composition in which alkaline oxides are excluded, the structure of ZnO is determined based on P₂O₅/B₂O₃, such that O-Zn-O covalent bonds and Zn²⁺ ionic bonds coexist. This structure creates a local positive charge that is different from the negative charge of bacteria in a normal state thereof. In addition, ROS generated by this structure causes oxidative stress on the bacteria. In accordance with the present disclosure, ZnO is not the main component that exhibits antibacterial properties. However, ZnO complements the antibacterial properties of silver (Ag) and complements antibacterial activity in terms of antibacterial sustainability. Therefore, unlike the conventional approach in which a high content of silver (Ag) is added to exhibit antibacterial sustainability and thus, the risk of discoloration occurs, the present disclosure may propose a novel scheme in which an appropriate amount of silver (Ag) is added.

In addition, in a state where O-Zn-O covalent bonds and Zn²⁺ ionic bonds coexist, nano ZnO as a ceramic material exhibits an effect similar to exhibiting ionic characteristics. This state allows antioxidation performance to be achieved, and allows no decrease in antioxidation performance in a state where there is no local alkaline oxide.

Next, WO₃ is an intermediate oxide. However, WO₃ is a component close to a glass-forming oxide because it has a high single bond strength with oxygen. In accordance with the present disclosure, the durability of the glass is improved based on a P-O-W bond. In addition, since the P-O-W bond improves the hardness of the glass, the resulting composition becomes needle-shaped powders different from the general wave-shaped powders when has been pulverized. When the needle-shaped antibacterial agent powders are applied, the dispersibility and floating properties are improved. In addition, in the ionization tendency, W is an electrophilic substance that allows silver (Ag) to be maintained in the Ag+ state. Therefore, W prevents the reduction of silver in the glass or in the state eluted from the glass. This means that W may exhibit antioxidation performance.

In accordance with the present disclosure, when a content of at least one of ZnO and WO₃ are smaller than 10 wt%, the durability of the antibacterial agent is reduced, and thus the antibacterial ability persistence is reduced, and the antioxidation performance is also reduced. On the other hand, when the content of at least one of ZnO and WO₃ is higher than 35 wt%, the melting point of the glass increases significantly, and the unmelted product may occur.

More preferably, the antibacterial glass composition of the present disclosure may contain 5 to 35 wt% of the ZnO and 5 wt% or smaller of the WO₃.

The phosphate-based glass including the antibacterial glass composition of the present disclosure is hygroscopic and easily dissolves in water. The most commonly used phosphate-based glass antimicrobial agent incudes Al₂O₃ (or ZrO₂) to improve durability. The structure of the glass is strengthened based on the P-O-Al bond, so that the amount of non-bridging oxygens is reduced and thus, the glass is strengthened. In this regard, the problem of increasing the melting point occurs. In addition, a scheme of adding ZnO to prevent discoloration due to Ag+ → AgO reduction in the silver-containing glass is utilized. When a small amount of ZnO is added to the phosphate-based glass, it does not affect the melting point. However, when a large amount of ZnO is added thereto to prevent discoloration, the melting point of the glass increases. In the phosphate-based glass containing silver, alkali metals (Na₂O, K₂O) and alkaline earth metals (CaO) are generally used to lower the melting point. The presence of these alkali metals or alkaline earth metals promotes the reaction of Ag+ → AgO, thereby causing the silver discoloration. Accordingly, silver precipitation or reduction occurs during the vitrification process. Therefore, when Na₂O, K₂O, and CaO are included in the phosphate-based glass, problems such as silver discoloration and lack of durability occur.

The present disclosure provides a novel antibacterial glass composition that may overcome the chronic problems of silver discoloration and reduced durability in designing the phosphate-based glass containing silver.

Due to the above-described component/structural characteristics, the antibacterial glass composition of the present disclosure prevents discoloration and improves antibacterial sustainability compared to conventional silver-based glass.

### Method for preparing antibacterial glass powder

Referring to the attached drawings below, the method for preparing an antibacterial glass powder according to an embodiment of the present disclosure will be described.

FIG. 1 is a process flow diagram showing the method for preparing the antibacterial glass powder according to an embodiment of the present disclosure.

As shown in FIG. 1, the method for preparing an antibacterial glass powder according to the present disclosure includes a mixing step S110, a melting step S120, a cooling step S130, and a pulverizing step S140.

### Mixing

In the mixing step S110, the antibacterial glass composition as described above is formed, and the characteristics of the antibacterial glass composition are as described above.

### Melting

In the melting step S120, the antibacterial glass composition is melted.

In this step, it is preferable that the melting is performed at 1,100 to 1,400°C for 1 to 60 minutes. When the melting temperature is lower than 1,100°C or the melting time is smaller than 1 minute, the antibacterial glass composition is not entirely melted, thereby causing a problem of immiscibility of the glass melt. On the other hand, when the melting temperature exceeds 1,400°C or the melting time exceeds 60 minutes, it is not economical because excessive energy and time are required.

### Cooling

In the cooling step S130, the molten antibacterial glass composition is cooled to room temperature.

In this step, it is preferable that the cooling is performed in a furnace. When air cooling or water cooling is applied, the internal stress of the antibacterial glass is increased, thereby causing cracks in some cases. Thus, it is preferable that the cooling is performed in the furnace.

### Pulverizing

In the pulverizing step S140, the cooled antibacterial glass is pulverized. In this regard, any of the commonly known ball mills, jet mills, and planetary mills may be applied to the pulverizing step.

Under this pulverizing step, the antibacterial glass is finely pulverized to produce an antibacterial glass powder. It is preferable that the antibacterial glass powder has an average diameter of 30 *µ*m or smaller, and a more preferable value of an average diameter thereof is in a range of 2 to 12 *µ*m.

### Home appliances

In one example, the home appliance according to the present disclosure includes a plastic injection-molded product including a resin material and the antibacterial glass powder as prepared by the method as described above and added to the resin material. The home appliances in accordance with the present disclosure may include, but are not limited to, water purifiers, washing machines, stand air conditioners, system air conditioners, refrigerators, etc.

In this regard, the plastic injection-molded product includes 95.0 to 99.0 wt% of the resin material and 1.0 to 5.0 wt% of the antibacterial glass powder.

When the amount of antibacterial glass powder as added is smaller than 1.0 wt% based on a total weight of the plastic injection-molded product, the antibacterial activity against Pseudomonas aeruginosa may not be sufficient. On the other hand, when the amount of the antibacterial glass powder as added is excessive, thus, exceeds 5.0 wt% based on the total weight of the plastic injection-molded product, the mechanical properties of the plastic injection-molded product may be deteriorated.

The resin material preferably includes at least one of PP (polypropylene), PC (polycarbonate), EPDM (ethylene propylene rubber), ABS (acrylonitrile-butadiene-styrene), and HIPS (high impact polystyrene).

In this regard, the antibacterial glass powder includes the antibacterial glass composition as described above.

Furthermore, the plastic injection-molded product may contain functional additives in addition to the antibacterial glass powder. In this regard, the functional additives may include at least one selected from antioxidants, foaming agents, impact absorbing and reinforcing agents, nucleating agents, coupling agents, etc.

Accordingly, the home appliance according to embodiments of the present disclosure has the plastic injection-molded product having the antibacterial glass powder applied as a part vulnerable to bacterial growth and coming into contact with moisture, thereby exhibiting the antibacterial activity to prevent the inhabitation and growth of various microorganisms.

In addition, the antibacterial glass powders of the present disclosure may be contained not only in the injection-molded product but also in a coating material for glass shelves, and as an additive for paint or powder coating.

### Examples

Hereinafter, the configuration and the effect of the present disclosure will be described in more detail based on a preferred example of the present disclosure. However, this is presented as a preferred implementation of the present disclosure and cannot be interpreted as limiting the present disclosure in any way.

Since the contents not described here may be sufficiently technically inferred by a person skilled in the art, the description thereof will be omitted.

### 1. Preparation of antibacterial glass powders sample

Table 1 shows components and contents thereof of the antibacterial glass composition of each of Present Examples and Comparative Examples.

The antibacterial glass composition having the components and contents thereof as described in each of Present Examples and Comparative Examples was melted in an electric furnace at a temperature of 1,200°C, and then cooled into a form of glass bulk on a stainless steel plate via air cooling. Thereafter, the obtained glass bulk was pulverized by air pulverizing means (jet mill), and thus, the antibacterial glass powders sample having a D₅₀ particle size of 2 to 12 *µ*m was prepared.

In this regard, one of AgNO₃, Ag₃PO₄, and Ag₂O was used as a raw material of the component Ag₂O based on the stoichiometry. As each of the remaining components, the same component as indicated in the Table 1 or a mixture thereof was used. As each of the remaining components, the same component as described in Table 1 was used. In addition, vitrification was classified into a case where the glass properties were homogeneously achieved, and a case where opalescence and the unmelted product occur.

**[Table 1] (Unit: weight%)**

| Components | Present Example | | | | | Comparative Example | | | |
|---|---|---|---|---|---|---|---|---|---|
| | 1 | 2 | 3 | 4 | 5 | 1 | 2 | 3 | 4 |
| P₂O₅ | 48.9 | 64 | 40 | 45.5 | 64 | 73.8 | 65.9 | 59.4 | 49.8 |
| B₂O₃ | 13.8 | 0 | 19.7 | 7.1 | 5.7 | 3.8 | 6.7 | 6 | 11.5 |
| CaO | 0 | 0 | 0 | 0 | 0 | 0 | 9.1 | 0 | 1 |
| MgO | 11.3 | 18.1 | 28.3 | 10.3 | 13.6 | 5.9 | 8.7 | 15.8 | 10.5 |
| WO₃ | 1.8 | 0.7 | 2.1 | 1.7 | 0 | 0 | 0 | 5.4 | 0 |
| ZnO | 22.3 | 15.7 | 8.4 | 32.7 | 15.4 | 15.8 | 8.8 | 12.8 | 25.8 |
| MnO₂ | 0.8 | 0.3 | 0.9 | 0.8 | 0.5 | 0 | 0 | 0.3 | 0.2 |
| Ag₂O | 1.1 | 1.2 | 0.6 | 1.9 | 0.8 | 0.7 | 0.8 | 0.3 | 1.2 |
| Total | 100 | 100 | 100 | 100 | 100 | 100 | 100 | 100 | 100 |

### 2. Property Evaluation of Antibacterial Glass Powders

Table 2 shows the property evaluation results of samples prepared according to Present Examples and Comparative Examples.

### 1) Antibacterial activity measurement

The antibacterial evaluation was performed on Present examples and Comparative Examples in which homogeneous vitrification was achieved, against four bacteria (Staphylococcus aureus, Escherichia coil, Klebsiella pneumoniae, Pseudomonas aeruginosa) according to the shake flask method (ASTM E2149-13a).

### 2) Antibacterial activity measurement after durability evaluation

In order to evaluate the durability of each of Present examples and Comparative Examples in which homogeneous vitrification was achieved, the sample was exposed to moisture using the ASTM C1285-14 (glass and glass ceramic durability evaluation method) test method, and then, the antibacterial activity test was additionally performed thereon (50°C, 32 hours)

**[Table 2]**

| Examples | | Present Example | | | | | Comparative Example | | | |
|---|---|---|---|---|---|---|---|---|---|---|
| | | 1 | 2 | 3 | 4 | 5 | 1 | 2 | 3 | 4 |
| Vitrification (O, X) | | O | O | O | O | O | O | O | O | X |
| Antibac terial activity | Staphylococcus aureus | 99.9% | 99.9% | 99.9% | 99.9% | 99.9% | 99.9% | 99.9% | 88.4% | - |
| | Escherichia coil | 99.9% | 99.9% | 99.9% | 99.9% | 99.9% | 99.9% | 99.9% | 90.4% | - |
| | Klebsiella pneumoniae | 99.9% | 99.9% | 99.9% | 99.9% | 99.9% | 99.9% | 99.9% | 60.5% | - |
| | Pseudomonas aeruginosa | 99.9% | 99.9% | 99.9% | 99.9% | 99.9% | 99.9% | 99.9% | 11.6% | - |
| Antibac terial activity (after durability evaluation) | Staphylococcus aureus | 99.9% | 99.9% | 99.5% | 99.9% | 99.9% | 87.4% | 53.4% | - | - |
| | Escherichia coil | 99.9% | 99.9% | 99.9% | 99.9% | 99.9% | 65.7% | 65.4% | - | - |
| | Klebsiella pneumoniae | 99.9% | 99.9% | 99.9% | 99.9% | 99.9% | 53.8% | 45.3% | - | - |
| | Pseudomonas aeruginosa | 99.9% | 99.9% | 99.4% | 99.9% | 99.7% | 14.7% | 32.8% | - | - |

As shown in Table 2, the samples prepared according to Present Examples 1 to 5 showed antibacterial activity higher than or equal to 99% against all four strains. In addition, the samples prepared according to Present Examples 1 to 5 were exposed to moisture according to the durability evaluation method and then, the antibacterial activity thereof was measured. In this case, all thereof exhibited antibacterial activity higher than or equal to 99%.

On the other hand, among Comparative Examples, Comparative Example 4 did not achieve the homogeneous vitrification. In addition, none of the samples prepared according to Comparative Examples 1 to 4 exhibited good antibacterial activity against all four strains.

## Claims

1. An antibacterial glass composition comprising:
30 to 70 wt% of P₂O₅;
10 to 30 wt% of MgO;
10 to 35 wt% of at least one of ZnO and WO₃;
0.3 to 1 wt% of MnO₂; and
0.4 to 2 wt% of Ag₂O,
wherein the antibacterial glass composition is free of K₂O, Na₂O, and CaO.

2. The antibacterial glass composition of claim 1, further comprising 20 wt% or smaller of B₂O₃.

3. The antibacterial glass composition of claim 1 or 2, wherein the antibacterial glass composition comprises:
5 to 35 wt% of ZnO; and
5 wt% or smaller of WO₃.

4. A method for preparation of an antibacterial glass powder, the method comprising:
(a) a step of mixing 30 to 70 wt% of P₂O₅, 10 to 30 wt% of MgO, 10 to 35 wt% of at least one of ZnO and WO₃, 0.3 to 1 wt% of MnO₂, and 0.4 to 2 wt% of Ag₂O with each other and stirring the mixture to prepare an antibacterial glass composition, wherein the antibacterial glass composition is free of K₂O, Na₂O, and CaO;
(b) a step of melting the antibacterial glass composition;
(c) a step of cooling the melted antibacterial glass composition; and
(d) a step of pulverizing the cooled antibacterial glass composition.

5. The method of claim 4, wherein in the step (a), the antibacterial glass composition further contains 20 wt% or smaller of B₂O₃.

6. The method of claim 4 or 5, wherein in the step (a), the antibacterial glass composition comprises:
5 to 35 wt% of ZnO; and
5 wt% or smaller of WO₃.

7. The method of any one of claims 4 to 6, wherein in the step (b), the melting is carried out a temperature in a range of 1,100 to 1,400°C for 1 to 60 minutes.

8. A home appliance comprising a plastic injection-molded product,
wherein the plastic injection-molded product comprises a resin material and an antibacterial glass powder added to the resin material,
wherein the plastic injection-molded product comprises:
95.0 to 99.0 wt% of the resin material; and
1.0 to 5.0 wt% of the antibacterial glass powder,
wherein the antibacterial glass powder comprises:
30 to 70 wt% of P₂O₅;
10 to 30 wt% of MgO;
10 to 35 wt% of at least one of ZnO and WO₃;
0.3 to 1 wt% of MnO₂; and
0.4 to 2 wt% of Ag₂O,
wherein the antibacterial glass powder is free of K₂O, Na₂O, and CaO.

9. The home appliance of claim 8, wherein the resin material includes at least one of PP (polypropylene), PC (polycarbonate), EPDM (ethylene propylene rubber), ABS (acrylonitrile-butadiene-styrene), and HIPS (high impact polystyrene).

10. The home appliance of claim 8 or 9, wherein the antibacterial glass powder further comprises 20 wt% or smaller of B₂O₃.

11. The home appliance of any one of claims 8 to 10, wherein the antibacterial glass powder comprises:
5 to 35 wt% of ZnO; and
5 wt% or smaller of WO₃.

## Patentansprüche

1. Eine antibakterielle Glaszusammensetzung, umfassend:
30 bis 70 Gew.-% P₂O₅;
10 bis 30 Gew.-% MgO;
10 bis 35 Gew.-% mindestens eines von ZnO und WO₃;
0,3 bis 1 Gew.-% MnO₂; und
0,4 bis 2 Gew.-% Ag₂O,
wobei die antibakterielle Glaszusammensetzung frei von K₂O, Na₂O und CaO ist.

2. Die antibakterielle Glaszusammensetzung nach Anspruch 1, ferner umfassend 20 Gew.-% oder weniger B₂O₃.

3. Die antibakterielle Glaszusammensetzung nach Anspruch 1 oder 2, wobei die antibakterielle Glaszusammensetzung umfasst:
5 bis 35 Gew.-% ZnO; und
5 Gew.-% oder weniger WO₃.

4. Ein Verfahren zur Herstellung eines antibakteriellen Glaspulvers, wobei das Verfahren umfasst:
(a) einen Schritt des Mischens von 30 bis 70 Gew.-% P₂O₅, 10 bis 30 Gew.-% MgO, 10 bis 35 Gew.-% mindestens eines von ZnO und WO₃, 0,3 bis 1 Gew.-% MnO₂ und 0,4 bis 2 Gew.-% Ag₂O miteinander und des Rührens des Gemischs, um eine antibakterielle Glaszusammensetzung herzustellen, wobei die antibakterielle Glaszusammensetzung frei von K₂O, Na₂O und CaO ist;
(b) einen Schritt des Schmelzens der antibakteriellen Glaszusammensetzung;
(c) einen Schritt des Abkühlens der geschmolzenen antibakteriellen Glaszusammensetzung; und
(d) einen Schritt des Pulverisierens der abgekühlten antibakteriellen Glaszusammensetzung.

5. Das Verfahren nach Anspruch 4, wobei in dem Schritt (a) die antibakterielle Glaszusammensetzung ferner 20 Gew.-% oder weniger B₂O₃ enthält.

6. Das Verfahren nach Anspruch 4 oder 5, wobei in dem Schritt (a) die antibakterielle Glaszusammensetzung umfasst:
5 bis 35 Gew.-% ZnO; und
5 Gew.-% oder weniger WO₃.

7. Das Verfahren nach einem der Ansprüche 4 bis 6, wobei in dem Schritt (b) das Schmelzen bei einer Temperatur in einem Bereich von 1.100 bis 1.400°C für 1 bis 60 Minuten durchgeführt wird.

8. Ein Haushaltsgerät, umfassend ein Kunststoff-Spritzgussprodukt,
wobei das Kunststoff-Spritzgussprodukt ein Harzmaterial und ein dem Harzmaterial zugesetztes antibakterielles Glaspulver umfasst,
wobei das Kunststoff-Spritzgussprodukt umfasst:
95,0 bis 99,0 Gew.-% des Harzmaterials; und
1,0 bis 5,0 Gew.-% des antibakteriellen Glaspulvers,
wobei das antibakterielle Glaspulver umfasst:
30 bis 70 Gew.-% P₂O₅;
10 bis 30 Gew.-% MgO;
10 bis 35 Gew.-% mindestens eines von ZnO und WO₃;
0,3 bis 1 Gew.-% MnO₂; und
0,4 bis 2 Gew.-% Ag₂O,
wobei das antibakterielle Glaspulver frei von K₂O, Na₂O und CaO ist.

9. Das Haushaltsgerät nach Anspruch 8, wobei das Harzmaterial mindestens eines von PP (Polypropylen), PC (Polycarbonat), EPDM (Ethylen-Propylen-Kautschuk), ABS (AcrylnitrilButadien-Styrol) und HIPS (schlagfestes Polystyrol) beinhaltet.

10. Das Haushaltsgerät nach Anspruch 8 oder 9, wobei das antibakterielle Glaspulver ferner 20 Gew.-% oder weniger B₂O₃ umfasst.

11. Das Haushaltsgerät nach einem der Ansprüche 8 bis 10, wobei das antibakterielle Glaspulver umfasst:
5 bis 35 Gew.-% ZnO; und
5 Gew.-% oder weniger WO₃.

## Revendications

1. Composition de verre antibactérien, comprenant :
30 à 70 % en poids de P₂O₅ ;
10 à 30 % en poids de MgO ;
10 à 35 % en poids de ZnO et/ou de WO₃ ;
0,3 à 1 % en poids de MnO₂ ; et
0,4 à 2 % en poids d'Ag₂O,
ladite composition de verre antibactérien étant exempte de K₂O, Na₂O et CaO.

2. Composition de verre antibactérien selon la revendication 1, comprenant en outre 20 % en poids ou moins de B₂O₃.

3. Composition de verre antibactérien selon la revendication 1 ou la revendication 2, ladite composition de verre antibactérien comprenant :
5 à 35 % en poids de ZnO ; et
5 % en poids ou moins de WO₃.

4. Procédé de préparation d'une poudre de verre antibactérien, ledit procédé comprenant :
(a) une étape de mélange de 30 à 70 % en poids de P₂O₅, 10 à 30 % en poids de MgO, 10 à 35 % en poids de ZnO et/ou de WO₃, 0,3 à 1 % en poids de MnO₂ et 0,4 à 2 % en poids d'Ag₂O, et d'agitation du mélange pour préparer une composition de verre antibactérien, ladite composition de verre antibactérien étant exempte de K₂O, Na₂O et CaO ;
(b) une étape de fusion de la composition de verre antibactérien ;
(c) une étape de refroidissement de la composition de verre antibactérien fondue ; et
(d) une étape de pulvérisation de la composition de verre antibactérien refroidie.

5. Procédé selon la revendication 4, où, lors de l'étape (a), la composition de verre antibactérien contient en outre 20 % en poids ou moins de B₂O₃.

6. Procédé selon la revendication 4 ou la revendication 5, où, lors de l'étape (a), la composition de verre antibactérien comprend :
5 à 35 % en poids de ZnO ; et
5 % en poids ou moins de WO₃.

7. Procédé selon l'une des revendications 4 à 6, où, lors de l'étape (b), la fusion est effectuée à une température comprise entre 1.100 et 1.400 °C pendant 1 à 60 minutes.

8. Appareil électroménager comprenant un produit en plastique moulé par injection,
où le produit en plastique moulé par injection comprend un matériau résineux et une poudre de verre antibactérien ajoutée au matériau résineux,
où le produit en plastique moulé par injection comprend :
95,0 à 99,0 % en poids du matériau résineux ; et
1,0 à 5,0 % en poids de la poudre de verre antibactérienne,
où la poudre de verre antibactérienne comprend :
30 à 70 % en poids de P₂O₅ ;
10 à 30 % en poids de MgO ;
10 à 35 % en poids de ZnO et/ou de WO₃ ;
0,3 à 1 % en poids de MnO₂ ; et
0,4 à 2 % en poids d'Ag₂O,
la poudre de verre antibactérienne étant exempte de K₂O, Na₂O et CaO.

9. Appareil électroménager selon la revendication 8, où le matériau résineux comprend au moins un composant parmi le PP (polypropylène), le PC (polycarbonate), l'EPDM (caoutchouc éthylène-propylène), l'ABS (acrylonitrile-butadiène-styrène) et le HIPS (polystyrène à haute résistance aux chocs).

10. Appareil électroménager selon la revendication 8 ou la revendication 9, où la poudre de verre antibactérienne comprend en outre 20 % en poids ou moins de B₂O₃.

11. Appareil électroménager selon l'une des revendications 8 à 10, où la poudre de verre antibactérienne comprend :
5 à 35 % en poids de ZnO ; et
5 % en poids ou moins de WO₃.
